# EUROPEAN PATENT SPECIFICATION

(11) **EP 2 463 140 B1**
(45) Date of publication and mention of the grant of the patent: **01.01.2014**
(21) Application number: 10194057.5
(22) Date of filing: 07.12.2010
(51) Int. Cl.: B60N 2/02, B60N 2/16, B60N 2/18

(54) **Vehicle seat**
Fahrzeugsitz
Siège de véhicule

(43) Date of publication of application: 13.06.2012
(73) Proprietor: Tachi-S Co., Ltd., Akishima-shi, Tokyo (JP)
(72) Inventor: Kanda, Kenji, Akishima-shi Tokyo (JP); Honda, Masaaki, Akishima-shi Tokyo (JP); Karino, Yosuke, Akishima-shi Tokyo (JP)
(74) Representative: Stuttard, Garry Philip

(56) References cited:
- DE-A1- 4 329 060
- FR-A1- 2 806 675

## Description

### 1. Field of the Invention

The present invention relates to a vehicle seat which is provided with a seat height adjustment mechanism or what is generally known as "seat lifter mechanism". In particular, the invention is directed to an improvement of link elements included in such seat lifter mechanism, which is designed to protect the link elements in the case of a rear-end collision.

### 2. Description of Prior Art

Typically, the seat lifter mechanism includes a pair of front links and a pair of rear links, which such an arrangement that the front links are pivotally connected between the forward underside of a vehicle seat and a floor of vehicle, whereas the rear links are pivotally connected between the rearward underside of the seat and the floor. Vertical synchronized rotation of those four links allows the seat to be adjustably raised and lowered to a desired level or height by means of the associated interlocking mechanisms, parts and control lever, and so forth.

Document JP 2009-286237 A1 shows the above-stated seat lifter mechanism including two front links and two rear links.

According thereto, the two front links are pivotally connected between a forwardly facing portion of seat cushion frame of a vehicle seat and a forwardly facing portion of upper rail of seat slide rail fixed on a floor of vehicle, wherein the upper rail is slidably engaged with a lower rail fixed on the floor. On the other hand, the two rear links are pivotally connected between a rearwardly facing portion of the seat cushion frame and a rearwardly facing portion of the upper rail. A connecting rod is horizontally extended and connected between the two rear links to allow synchronized rotation of both two rear links relative to the axis of the connecting rod in vertical direction. One of the two rear links is formed with a sector gear portion therein. Such sector gear portion is in meshed engagement with a pinion rotatably supported in the seat cushion frame, the pinion being connected to a drive element or a manual operation lever having a brake device incorporated therein. By raising the manual operation lever, the pinion is rotated in normal direction, thereby causing rotation of the sector gear portion, so that both two rear links are rotated upwardly, which in turn causes upward displacement of the seat cushion frame or seat. Reversely, lowering of the manual operation lever causes reverse rotation of the pinion, thus resulting in downward rotation of both two rear links to cause downward displacement of the seat.

In the foregoing conventional seat, as stated above, only one rear link (hereinafter, a first rear link) is provided with the sector gear portion and pivotally connected, via the pinion and brake device, between the seat and floor. But, the other rear link (hereinafter, a second rear link) is not formed as such, but simply pivotally connected between seat and floor. Due to that structure, in the case where a rear-end collision occurs, with a backward great excessive load being applied from a seat occupant under inertia to the seat, the excessive backward load is intensively exerted upon the second rear link, as a result of which, that second rear link is deformed and therefore one lateral side of the seat where the second rear link exists is lowered or inclined downwardly relative to the other lateral side of seat where the first rear link exists. This is because, in the first rear link, the excessive great load is dispersed in the sector gear portion and pinion and thus reduced to avoid deformation of the link, whereas the load is straightly exerted upon the second rear link without being dispersed and reduced, hence deforming the second rear link only. Consequently, in that case, the seating posture of seat occupant becomes unstable, and moreover, both first and second rear links are not smoothly moved in synchronized manner via the connected rod connected therebetween.

A seat according to the preamble of claim 1 is disclosed in FR-A-2806675.

### SUMMARY OF THE INVENTION

In view of the above-stated drawbacks, it is a primary purpose of the present invention to provide an improved vehicle seat of the type including link elements movable for raising and lowering the seat, which prevents the above-described lowering of the seat or the inclination of one side of the seat in the case of rear-end collision

In order to achieve such purpose, in accordance with the present invention, a seat to be mounted in a vehicle is basically comprised of:
a seat cushion frame including a first frame member and a second frame member;
a drive pinion rotatably supported in the first frame member of the seat cushion frame, the drive pinion being operatively connected with a drive source provided with the seat;
a first link element having: an upper portion pivotally connected with the first frame member of the seat cushion frame; and a lower portion pivotally connected with a floor of the vehicle, wherein the upper portion has, defined therein, a sector gear portion which is in meshed engagement with the drive pinion;
the first link element including a hole and a gear portion;
a second link element having: an upper portion pivotally connected with the second frame member of the seat cushion frame; and a lower portion pivotally connected with the floor of the vehicle;
the second link element including a hole and a gear portion;
a connecting axis element rotatably extended between the first and second frame members of the seat cushion frame;
the first and second link elements being coupled together by the connecting axis element for synchronized movement;
a reinforcing transmission shaft having one end portion and another end portion, the reinforcing transmission shaft extending in a parallel relation with the connecting axis element, such that the afore-said one end portion thereof extends through the hole of the first link element and is rotatably connected with the first frame member of the seat cushion frame, whereas the afore-said another end portion thereof extends through the hole of the second link element and is rotatably connected with the second frame member of the seat cushion frame;
a first pinion fixed to the one end portion of the reinforcing transmission shaft, the first pinion being in meshed engagement with the gear portion of the first link element;
   and
a second pinion fixed to the afore-said another end portion of the reinforcing transmission shaft, the second pinion being in meshed engagement with the gear portion of the second link element.

Preferably, the hole of the first link element may be so formed as to extend in a direction vertically of the seat, and the gear portion of the first link element is formed in one edge portion of that hole, thus defining an inwardly-toothed gear portion vertically in the first link element.

As one preferred aspect, the above-described seat may be constructed as follows: The first link element comprises a first front link and a first rear link. The first front link is pivotally connected with a forwardly facing portion of the first frame member, whereas the first rear link is pivotally connected with a rearwardly facing portion of the first frame member. The second link element comprises a second front link and a second rear link, The second front link is pivotally connected with a forwardly facing portion of said second frame member, whereas the second rear link is pivotally connected with a rearwardly facing portion of the first frame member. The afore-said sector gear portion is formed in an upper portion of the first rear link, wherein the upper portion corresponds to the upper portion of the first link element, The afore-said hole and gear portion associated with the first link element are formed in the first rear link, while the hole and gear portion associated with the second link element are formed in the second rear link. The afore-said reinforcing transmission shaft is arranged between the first and second rear links in such a manner that such one and another end portions of the reinforcing transmission shaft extend through the respective holes of the first and second rear links, with the first and second pinions being in meshed engagement with the gear portions respectively of the first and second rear links.

Other various features and advantages will become apparent from reading of the description, hereinafter, with reference to the accompanied drawings.

### BRIEF DESCRIPTION OF THE DRAWINGS

Fig. 1 is a partly broken perspective view showing a seat in accordance with the present invention;
Fig. 2 is a partly broken perspective view showing a principal part of the seat in accordance with the invention;
Fig. 3 is a partly broken and enlarged perspective view of the seat, which specifically showing one principal part provided to the left-side portion of the seat and another principal part provided to the right-side portion of the seat; and
Fig. 4 is a partly broken fragmentary sectional view of the principal parts of the invention.

### DETAILED DESCRIPTION OF PREFERRED EMBODIMENT OF THE INVENTION

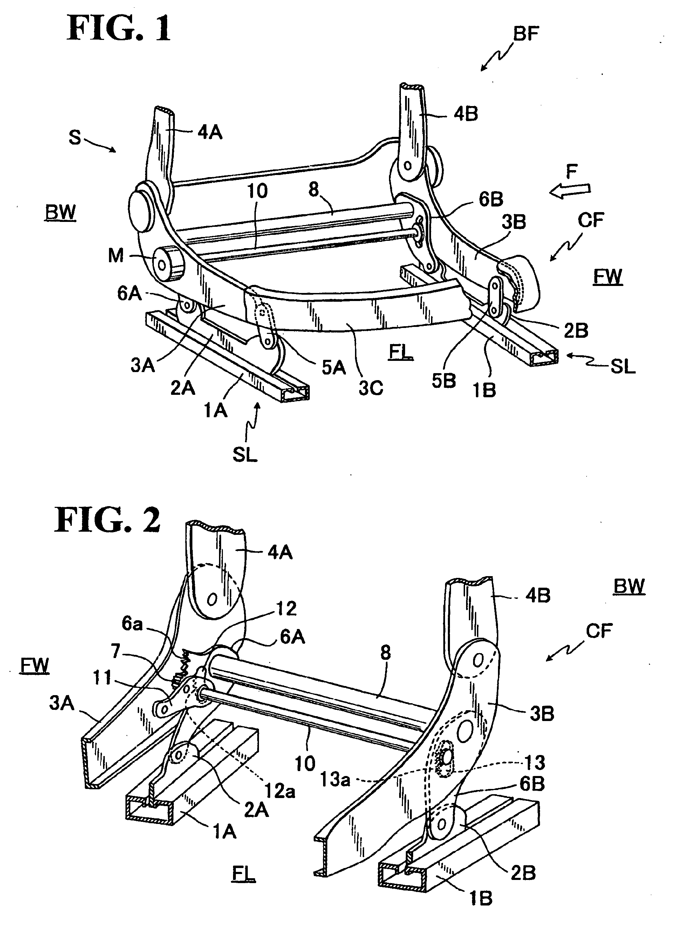

Referring to Figs. 1 to 4, there is illustrated a preferred embodiment of vehicle seat generally designated by (S) in accordance with the present invention, which is provided with a seat lifter mechanism (not designated) for adjustment in height of the seat.

As shown, the seat (S) is basically comprised of a seat cushion frame (CF) and a seat back frame (BF) rotatably connected with the seat cushion frame (CF). Though not shown, it is to be understood that the seat cushion frame (CF) and seat back frame (BF) are each properly upholstered, using a foam padding and a trim cover assembly covering that foam padding, so that the seat cushion frame (CF) is normally upholstered to form a seat cushion, whereas the seat back frame (BF) is normally upholstered to form a seat back, in the present seat (S).

It is to be noted that the wording "forward" or "forwardly" refers to a forward side (FW) facing forwardly of the seat (S), whereas the wording "rearward" or "rearwardly" refers to a rearward side (BW) facing rearwardly of the seat (S).

The seat back frame (BF) is shown to include a pair of side frame members (4A) and (4B). On the other hand, the seat cushion frame (CF) is shown as comprising: a pair of left- and right-side lateral frame members (3A) and (3B); and a forwardly facing cross frame member (3D) fixedly connected between the two forward ends respectively of the two lateral frame members (3A) and (3B).

A seat lifter mechanism (not designated) provided in the seat (S) includes: a pair of left- and right-side front links (5A) and (5B) which are formed in a known manner; and a pair of left- and right-side rear links (6A) and (6B) which form one of principal parts of the present invention. Basically, those four links are arranged between the seat cushion (at CF) and seat slide device (SL) (or a floor of vehicle designated by FL) in a parallel linkage fashion, as found in the art, such that the two front links (5A) (5B) are maintained in a parallel relation with the respective two rear links (6A) (6B), whenever those all four links are pivotally articulated vertically in synchronized way.

In this context, the seat slide device (SL) is used with the seat (S) to allow for adjustment in position of the seat in forward and rearward directions. But, the seat slide device itself may not be used, in which case, all lower end portions of the front and rear links may be directly or indirectly connected to the floor (FL) in an appropriate manner, using a suitable means.

As shown, the seat slide device (SL) typically comprises a pair of left-side upper and lower rails (2A) and (1A) and a pair of right-side upper and lower rails (2B) and (1B). In any of the left and right-side rails, the upper rails (2A, 2B) are slidably engaged with the respective lower rails (1A, 1B) fixed on the floor (FL), as known in the art.

Referring now to Fig. 1, the left-side front link (5A) is at the upper end thereof pivotally connected with a forwardly facing end portion of the left-side lateral frame member (3A) of seat cushion frame (CF), while being at the lower end thereof pivotally connected with a forwardly facing end portion of the left-side upper rail (2A). On the other hand, likewise, the right-side front link (5B) is at the upper end thereof pivotally connected with a forwardly facing end portion of the right-side lateral frame member (3B) of seat cushion frame (CF), while being at the lower end thereof pivotally connected with a forwardly facing end portion of the right-side upper rail (2B)

As seen in Figs. 2 to 4, in accordance with the present invention, both left- and right-side rear links (6A) and (6B) are formed in the illustrated configuration substantially identical to each other, except that the left-side rear link (6A) has a sector gear portion (6a) defined therein.

Specifically, according to the shown embodiment, the right-side rear link (6B) is so formed to have: a lower end portion (6B-2) pivotally connected with the rearwardly facing end portion of the right-side upper rail (2B); and a widened upper portion (6B-1) diverging upwardly from the lower end portion (6B-2).

On the other hand, likewise, the left-side rear link (6A) is formed to have: a lower end portion (6A-2) pivotally connected with the rearwardly facing end portion of the left-side upper rail (2A); and a widened upper portion (6A-1) diverging upwardly from the lower end portion (6B-2). But, in this particular left-side rear link (6A), a sector gear portion (6a) is formed integrally in the forwardly facing edge region of the widened upper portion (6A-1).

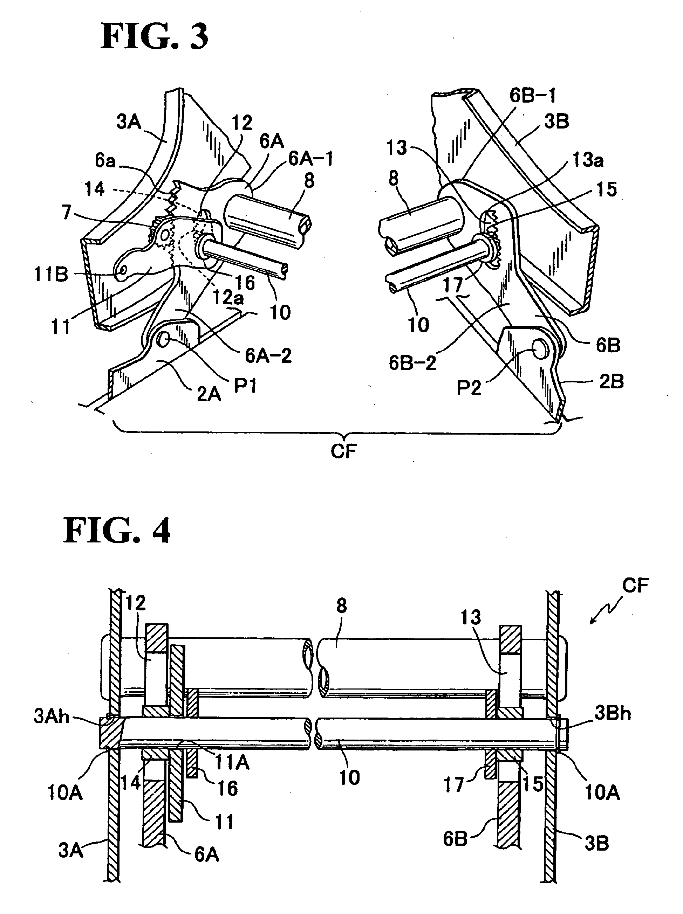

As best seen in Figs. 3 and 4, both two widened upper portions (6A-1) and (6B-1) respectively of the left- and right-side rear links (6A) and (6B) are rotatably connected with the left- and right-side lateral frame members (3A) and (3B), respectively, via a connecting rod (8). Connecting rod (8) is shown to be fixedly connected between the two lateral frame members (3A) (3B), so as to extend horizontally therebetween. In this regard, precisely stated, the left-side rear link's upper portion (6A-1) is, at its rearwardly facing end region, rotatably engaged on and about the left-side end portion of the connecting rod (8), as known in the art. Likewise, the right-side rear link's upper portion (6B-1) is, at its rearwardly facing end region, rotatably engaged on and about the right-side end portion of the connecting rod (8). In that way, the two upper portions (6A-1) (6B-1) respective of the left- and right-side rear links (6A) (6B) are pivotally connected with the seat cushion or the respective left- and right-side lateral frame members (3A) (3B).

The right-side rear link's upper portion (6B-1) further has an arcuate hole (13) formed in the forwardly facing end region thereof, the arcuate hole (13) basically extending in a direction vertically of the rear link (6B) as well as vertically of the seat cushion frame (CF). As shown, such arcuate hole (13) is situated at a point forward of the connecting rod (8) and extends along the circumference of a circle having its center at the central axis of the connecting rod (8). Designation (13a) denotes an inwardly-toothed arcuate gear portion defined integrally in and along the forwardly facing arcuate edge of the arcuate hole (13). Such gear portion (13a) naturally assumes an arcuate shape extending along a circle, the center of which is at the central axis of connecting rod (8).

Likewise, formed in the forwardly facing end region of the left-side rear link's upper portion (6A-1) is an arcuate hole (12) which also basically extends in a direction vertically of the rear link (6A) as well as vertically of the seat cushion frame (CF). The arcuate hole (12) is situated at a point forward of the connecting rod (8) and extends along the circumference of a circle having its center at the central axis of that connecting rod (8). Designation (12a) denotes an inwardly-toothed arcuate gear portion defined integrally in and along the forwardly facing arcuate edge of the arcuate hole (12). Such gear portion (13a) naturally assumes an arcuate shape extending along a circle, the center of which is at the central axis of connecting rod (8). Note that those arcuate hole (12) and gear portion (12a) are respectively identical in shape and size to the previously stated arcuate hole (13) and gear portion (13a) associated with the right-side rear link (6B).

It is also noted that the sector gear portion (6a) formed in the left-side rear link (6A) is situated forwardly of the afore-said arcuate hole (12), with the arcuate periphery of the sector gear portion (5a) extending along the circumference of a circle having its center at the central axis of the connecting rod (8). It is still further noted that the left- and right-side arcuate holes (12) and (13) are arranged so as to be in correspondence with each other, so that, during vertical synchronized displacement of both two rear links (6A) (6B), those two holes (12) (13) are synchronously displaced, while being maintained in alignment with each other.

Designation (7) denotes a drive pinion gear which is in meshed engagement with the sector gear portion (6a) stated previously. The drive pinion gear (7) has a support shaft (not designated) fixed in the center thereof. Although not clearly shown, one end of such support shaft is rotatably supported in the left-side lateral frame member (3A) and connected integrally with a drive shaft of a drive source (M), a part of seat lifter mechanism, whereas the other end of the support shaft is rotatably supported by a bracket (11) having a base end portion fixed by a pin (11B) to the left-side lateral frame member (3A). Thus, the drive pinion gear (7) is rotatably disposed between the lateral frame member (3A) and the bracket (11). In this respect, the drive source (M) may be an electric motor with reduction gear in the case of the seat lifter mechanism used being of a powered type, or alternatively be a manual handle having a brake device provided therewith in the case of the seat lifter mechanism used being of a manually operated type.

In accordance with the present invention, a reinforcing transmission shaft (10) is provided for the purpose of protecting the right-side rear links (6B) against deformation and insuring synchronized movement of both two rear links (6A) and (6B). Specifically, as seen from Figs. 3 and 4, the reinforcing transmission shaft (10) has: a first pinion (14) fixed on and about the left-side end portion thereof; and a second pinion (15) fixed on and about the right-side end portion thereof. Briefly stated, the reinforcing transmission shaft (10) is rotatably journalled between the left- and right-side lateral frame members (3A) (3B) in a parallel relation with the connecting shaft (8), with the two end portions of that shaft (10) passing through the respective two arcuate holes (12) (13) respectively of the left- and right-side rear links (6A) (6B). In this regard, the first pinion (14) is meshed with the inwardly toothed gear portion (12a) formed in the arcuate hole (12), while the second pinion (15) is meshed with the inwardly toothed gear portion (13a) formed in the arcuate hole (13). As shown, it is important that the reinforcing transmission shaft (10) is disposed forwardly of the connecting rod (8) for the purpose of allowing a load (F) to be first applied to that reinforcing transmission shaft (10) and dispersed therethrough to the seat cushion frame, as will be described later.

Referring particularly to Fig. 4 in conjunction with Fig. 3, the left-side end portion of the reinforcing transmission shaft (10) is also rotatably received in a bearing hole (11A) formed in the bracket (11), Hence, the bracket (11) is supported by the following two points: the pin (11B) and the reinforcing transmission shaft (10), which advantageously disperses a part of load (F) applied to the drive pinion (7), as will be described later.

Further, as best seen in Fig. 4, one distal end region of the reinforcing transmission shaft (10) is rotataly received in a bearing hole (3Ah) formed in the left-side lateral frame member (3A) and retained by a securing ring (10A) against removal therefrom. The other distal end region of reinforcing transmission shaft (10) is likewise rotatably received in another bearing hoe (3Bh) formed in the right-side lateral frame member (3B) and retained by a securing ring (10A) against removal therefrom.

The reinforcing transmission shaft (10) has a pair of left- and righ-side detent rings (16) and (17) fixed thereon, which are adapted for preventing the shaft (10) against lateral dislocation in a direction along the longitudinal axis thereof. As depicted in both Figs. 3 and 4, the left-side detent ring (16) is fixed on and about the left-side end portion of the shaft (10) so as to slightly contact the surface of the bracket (11), whereas the right-side detent ring (17) is fixed on and about the right-side end portion of the shaft (10) so as to slightly contact the inward wall of the right-side rear link (6B). With such arrangement, the reinforcing transmission shaft (10) is positively prevented against dislocation in any of left and right directions along the longitudinal axis thereof.

As constructed above, looking at Fig. 3, when a seat occupant operates the drive sources (M) to raise the seat (S) for instance, the drive pinion (7) is rotated clockwise, the sector gear portion (6a) meshed with that drive pinion (7) is rotated anticlockwise relative to the connecting shaft (8), which in turn causes the left-side rear link (6A) per se to rotate forwardly and upwardly relative to the lower pivot point (P1). At this moment, both of the following actions are simultaneously effected:
(i) the afore-said forward and upward rotation of left-side rear link (6A) is simultaneously transmitted via the connecting rod (8) to the right-side rear link (6B), thereby causing synchronized forward and upward rotation of the two rear links (6A) and (6B) relative to the receptive two lower pivot points (P1) and (P2); and
(ii) simultaneous therewith, the inwardly toothed gear portion (12a) formed in the left-side rear link (6A) is rotatively displaced anticlockwise relative to the connecting shaft (8), thereby causing simultaneous anticlockwise rotation of the first pinion (14) meshed with that gear portion (12a). With the anticlockwise rotation of first pinion (14), the reinforcing transmission shaft (10) is simultaneously rotated in the likewise anticlockwise direction, so that the anticlockwise rotation of first pinion (14) is transmitted via the reinforcing transmission shaft (10) to the second pinion (15) which is therefore simultaneously rotated anticlockwise, whereupon the inwardly toothed gear portion (13a) meshed with that second pinion (15) is rotatively displaced anticlockwise relative to the connecting rod (8), which in turn causes the right-side rear link (6B) per se to rotate forwardly and upwardly relative to the lower pivot point (P2) in synchronism with the lift-side rear link (6A) being rotated in the likewise forward and upward directions relative to the lower pivot point (P1).

Of course, both two front links (5A) (5B) are also simultaneously rotated forwardly and upwardly in synchronism with the above-described two rear links (6A) (6B), since those four links assume a parallel linkage structure as stated previously.

Accordingly, with the foregoing movement of all the links (5A, 5B, 6A and 6B), the seat (S) is displaced upwardly away from the slide rail device (SL) or floor (FL). When the seat occupant stops operation of the drive source (M), all the four links (5A, 5B, 6A, and 6B) are stopped and positioned at a given angle of inclination relative to the seat slide devices (SL) or floor (FL), so that the seat (S) is set to a desired level. At this time, those four links are retained against movement by a brake effect which may be given by a reduction gear of electric motor in the case of the electric motor being employed as the drive source (M), or by a brake unit provided in a manual handle in the case of the manual handle being employed as the drive source (M). If it is desired to lower the seat (S), in brief, the drive source (M) may be operated reversely to cause anticlockwise rotation of the drive pinion (7) for clockwise rotative displacement of the sector gear portion (6a) and also for clockwise synchronized rotative displacement of the two inwardly toothed gear portions (12a) (13a) via the reinforcing transmission shaft (10), thereby causing backward and downward movement of all the four links (5A, 5B, 6A and 6B), so that the seat (S) may be adjustingly lowered to a desired level.

It is noted that the entire length of both two arcuate holes (12) (13) defines the range and limit of vertical displacement of both two rear links (6A) (6B) and thus serves as a stopper for preventing the two rear links (6A) (6B) against excessive vertical displacement. Namely, for example, suppose that the drive source (M) is operated to cause upward displacement of the links (6A) (6B) to raise the seat (S). In that instance, if a seat occupant continues on operating the drive source (M), the two arcuate holes (12) (13) are rotatively displaced downwardly to the extent that the two upper edges respectively of the two arcuate holes (12) (13) are brought to contact with the respective two pinions (14) (15), as a result of which, the operation of the drive source (M) is forcibly blocked, whereby the rear links (6A) (6B) are forcibly prevented against further upward displacement. Reversely, if the seat occupant continues operation of the drive source (M) to cause downward displacement of the links (6A) (6B) to lower the seat (S), the two lower edges respective of the two arcuate holes (12) (13) come to contact with the respective two pinions (14) (15), thereby forcibly blocking the operation of drive source (M) and thus preventing further downward displacement of the rear links (6A) (6B).

By virtue of the above-described arrangement and structure, it is to be appreciated that, when a rear-end collision occurs, with an excess great load (F) (see Fig. 1) being applied backwardly and downwardly form a seat occupant (not shown) under inertia to the seat cushion frame (CF), most of the load (F) is intensively exerted upon the reinforcing transmission shaft (10) prior to being applied to the connecting rod (8) and both two rear links (6A) (6B). Thus, the load (F) is transmitted through that reinforcing transmission shaft (10) equally to each of the left- and right-side lateral frame members (3A) (3B) and dispersed therein, without being directly applied to the two rear links (6A) (6B). With such arrangement, the excessive great load (F) is not directly applied to the right-side rear link (6B) which is not robust structurally in comparison with the left-side rear link (6A), thereby insuring to protect the relatively weak rear link (6B) against deformation, and therefore solving such conventional problems as undesired lowering of the seat or inclination of one lateral side of the seat which are caused by deformation of one relatively brittle rear link in the case of rear-end collision.

Also, it is to be appreciated that, in addition to being synchronously displaceable via the connecting rod (8), both two rear links (6A) (6B) are assisted by the combination of pinions (14 and 15) and inwardly toothed gear portions (12a and 13b) as well as the reinforcing transmission shaft (10) to insure synchronized vertical displacement of the two rear links (6A and 6B). Moreover, the meshed engagement of two pinions (14 and 15) with the respective two gear portions (12a and 13a) in effect establishes a great robust structure in cooperation with the reinforcing transmission shaft (10), which provides a stable passage through which the load (F) is to be smoothly and equally transmitted to and dispersed in each of the left- and right-side lateral frame members (3A) and (3B). Consequently, the two rear links (6A and 6B) are not damaged by the excessive great load (F) in the case of rear-end collision, and that, even if a slight deformation and distortion is caused in and/or between the seat cushion frame (CF) and connecting rod (8) due to the excessive great load (F), the meshed engagement of the two pinions (14 and 15) with the respective two gear portions (12a and 13b) is still maintained, thus insuring to allow both two rear links (6A and 6B) bo be moved together in a synchronized manner, without being influenced by the rear-end collision.

Additionally, by virtue of such meshed engagement of pinions (14 and 15) with the respective gear portions (12a and 13a) and the reinforcing transmission shaft (10), the brake effect stated previously, which is normally given by the drive source (M), such as a reduction gear of electric motor used as the drive source or a brake unit provided in a manual handle used as the drive source, is also transmitted through the pinions (14 and 15), gear portions (12a and 13a) and reinforcing transmission shaft (10) in a direction from the left-side rear link (6A) to the right-side rear link (6B). Hence, the brake effect is equally given to both of the two rear links (6A and 6B), which effectively insures stable automatic stoppage of those two particular rear links (5A and 6B) at the same time, every time a seat occupant stops operation of the drive source (M). Accordingly, in accordance with the present invention, the right-side rear link (6B), which is not so robust relative to the left-side rear link (6A), is protected against deformation in the case of rear-end collision, while insuring a smooth synchronized displacement of both two rear links (6A and 6B). It is therefore materially possible to prevent lowering of the seat or inclination of one side of the seat which is caused by the rear-end collision as found in the conventional vehicle seats.

## Claims

1. A seat (S) to be mounted in a vehicle, comprising:
a seat cushion frame (3) including a first frame member and a second frame member;
a drive pinion (7) rotatably supported in said first frame member of said seat cushion frame, said drive pinion (7) being operatively connected with a drive source provided with the seat;
a first link element (6A) having: an upper portion pivotally connected with said first frame member of said seat cushion frame; and a lower portion pivotally connected with a floor of said vehicle, wherein said upper portion has, defined therein, a sector gear (6a) portion which is in meshed engagement with said drive piniort (7);
said first link element (6A) including a hole (12) and a gear portion (12a);
a second link element (6B) having: an upper portion pivotally connected with said second frame member of said seat cushion frame; and a lower portion pivotally connected with said floor of said vehicle;
a connecting axis element (8) rotatably extended between said first (3A) and second frame members (3B) of said seat cushion frame;
said first and second link elements (6A,6B) being coupled together by said connecting axis element (8) for synchronized movement; **characterised in that** said second link element (6B) including a hole (13) and a gear portion (13a); and the seat further comprises :
a reinforcing transmission shaft (10) having one end portion and another end portion, said reinforcing transmission shaft (10) extending in a parallel relation with said connecting axis element (8), such that said end portion thereof extends through said hole (12) of said first link element (6A) and is rotatably connected with said first frame member of said seat cushion frame, whereas said another end portion thereof extends through said hole (13) of said second link element (6B) and is rotatably connected with said second frame member of said seat cushion frame;
a first pinion (14) fixed to said one end portion of said reinforcing transmissions shaft (10), said first pinion (14) being in meshed engagement with said gear portion of said first link element;
and
a second pinion (15) fixed to said another end portion of said reinforcing transmission shaft (10) said second pinion being in meshed engagement with said gear portion of said second link element

2. The seat as claimed in claim 1, which includes a slide rail device (SL) comprising a pair of lower rails (1A,1B) fixed on said floor of said vehicle and a pair of upper rails (2A,2B) slidably engaged with said pair of lower rails, respectively, wherein said lower portion of said first link element is pivotally connected with one of said pair of upper rails, while said lower portion of said second link element is pivotally connected with the other of said pair of upper rails.

3. The seat as claimed in claim 1, wherein said first link element (6A) comprises a first front link (5A) and a first rear link (6A), wherein said first frame member has a forwardly facing portion and a rearwardly facing portion, wherein said first front link (5A) is pivotally connected with a forwardly facing portion of said first frame member, whereas said first rear link (6A) is pivotally connected with a rearwardly facing portion of the first frame member, wherein said second link element (6B) comprises a second front link (5B) and a second rear link (6B), wherein said second frame member has a forwardly facing portion and a rearwardly facing portion, wherein said second front link (5B) is pivotally connected with a forwardly facing portion of said second frame member, whereas said second rear link (6B) is pivotally connected with a rearwardly facing portion of the second frame member, wherein said sector gear portion (6a) is formed in an upper portion of said first rear link (6A), said upper portion corresponding to said upper portion of said first link element, wherein said hole (12) and gear portion (12a) associated with said first link element are formed in said first rear link (6A), wherein said hole (13) and gear portion (13a) assoiated with said second link element are formed in said second rear link (6B); and wherein said reinforcing transmission shaft (10) is arranged between said first and second rear links (6A,6B) in such a manner that said one and another end portions of the reinforcing transmission shaft (10) extend through the respective said holes of said first and second rear links, with said first and second pinions (14,15) being in meshed engagement with said gear portions respectively of said first and second rear links.

4. The seat as claimed in claim 1, wherein said hole of said first link element (6A) is so formed as to extend in a direction vertically of the seat, and wherein said gear portion of said first link element (6A) is formed in one edge portion of said hole, thus defining an inwardly-toothed gear portion in said first link element

5. The seat as claimed in claim 2, wherein said hole of said first rear linkl (6A) is so formed as to extend in a direction vertically of the seat, wherein said gear portion of said first rear link (6A) is formed in one edge portion of said hole, thus defining an inwardly-toothed gear portion in said first rear link, wherein said hole of said second rear link (6B) is so formed as to extend in a direction vertically of the seat, and wherein said gear portion of said second rear link (6B) is formed in one edge portion of said hole, thus defining an inwardly-toothed gear portion in said second rear link,

## Patentansprüche

1. Ein Sitz (S) zum Einbau in ein Fahrzeug, umfassend:
ein Sitzkissengestell (3), das ein erstes Gestellelement und ein zweites Gestellelement enthält;
ein in dem ersten Gestellelement des Sitzkissengestells drehbar gelagertes Antriebszahnrad (7), wobei das Antriebszahnrad (7) mit einer mit dem Sitz bereitgestellten Antriebsquelle wirkverbunden ist;
ein erstes Verbindungselement (6A) aufweisend: einen oberen Abschnitt, der schwenkbar mit dem ersten Gestellelement des Sitzkissengestells verbunden ist; und einen unteren Abschnitt, der schwenkbar mit einem Boden des Kraftfahrzeugs verbunden ist, wobei der obere Abschnitt einen darin ausgebildeten, mit dem Antriebszahnrad (7) in Verzahnungseingriff stehenden Zahnbogen-Abschnitt (6a) aufweist;
wobei das erste Verbindungselement (6A) ein Loch (12) und einen Zahnungsabschnitt (12a) aufweist;
ein zweites Verbindungselement (6B) aufweisend: einen oberen Abschnitt, der schwenkbar mit dem zweiten Gestellelement des Sitzkissengestells verbunden ist; und einen unteren Abschnitt, der schwenkbar mit dem Boden des Kraftfahrzeugs verbunden ist,
ein Verbindungsachsenelement (8), welches sich drehbar zwischen dem ersten und dem zweiten Gestellelement (3A, 3B) des Sitzkissengestells erstreckt;
wobei das erste und das zweite Verbindungselement (6A, 6B) mittels des Verbindungsachsenelements (8) zu einer synchronisierten Bewegung miteinander verbunden sind;
**dadurch gekennzeichnet, dass** das zweite Verbindungselement (6B) ein Loch (13) und einen Zahnungsabschnitt (13a) aufweist und der Sitz weiterhin umfasst:
eine verstärkende Transmissionswelle (10), die einen Endabschnitt und einen anderen Endabschnitt aufweist, wobei die verstärkende Transmissionswelle (10) sich in paralleler Anordnung zum Verbindungsachsenelement (8) erstreckt, so dass der Endabschnitt davon sich durch das Loch (12) des ersten Verbindungselements (6A) erstreckt und drehbar verbunden ist mit dem ersten Gestellelement des Sitzkissengestells, wobei der andere Endabschnitt davon sich durch das Loch (13) des zweiten Verbindungselements (6B) erstreckt und drehbar verbunden ist mit dem zweiten Gestellelement des Sitzkissengestells;
ein erstes Ritzel (14), das an dem einen Endabschnitt der verstärkenden Transmissionswelle (10) befestigt ist, wobei das erste Ritzel (14) in Verzahnungseingriff mit dem Zahnungsabschnitt des ersten Verbindungselements steht;
und ein zweites Ritzel (15), das an dem weiteren Endabschnitt der verstärkenden Transmissionswelle (10) befestigt ist, wobei das zweite Ritzel in Verzahnungseingriff mit dem Zahnungsabschnitt des zweiten Verbindungselements steht.

2. Sitz gemäß Anspruch 1, der eine Gleitschienenvorrichtung (SL) enthält, welches ein Paar unterer Schienen (1A, 1B), die am Boden des Kraftfahrzeugs befestigt sind, und ein Paar oberer Schienen (2A, 2B), die jeweils mit dem Paar unterer Schienen verschiebbar in Eingriff stehen, aufweist, wobei der untere Abschnitt des ersten Verbindungselements schwenkbar mit einer Schiene des oberen Schienenpaars verbunden ist, während der untere Abschnitt des zweiten Verbindungselements schwenkbar mit der anderen Schiene des oberen Schienenpaars verbunden ist.

3. Sitz gemäß Anspruch 1, worin das erste Verbindungselement (6A) eine erste vordere Verbindung (5A) und eine erste hintere Verbindung (6A) aufweist, wobei das erste Gestellelement einen nach vorne weisenden Abschnitt und einen nach hinten weisenden Abschnitt aufweist, wobei die erste vordere Verbindung (5A) schwenkbar mit einem nach vorne weisenden Abschnitt des ersten Gestellelements verbunden ist, und wobei die erste hintere Verbindung (6A) schwenkbar mit einem nach hinten weisenden Abschnitt des ersten Gestellelements verbunden ist, wobei das zweite Verbindungselement (6B) eine zweite vordere Verbindung (5B) und eine zweite hintere Verbindung (6B) aufweist, wobei das zweite Gestellelement einen nach vorne weisenden Abschnitt und einen nach hinten weisenden Abschnitt aufweist, wobei die zweite vordere Verbindung (5B) schwenkbar mit einem nach vorne weisenden Abschnitt des zweiten Gestellelements verbunden ist, während die zweite hintere Verbindung (6B) schwenkbar mit einem nach hinten weisenden Abschnitt des zweiten Gestellelements verbunden ist, wobei der Zahnbogen-Abschnitt (6a) in einem oberen Abschnitt der ersten hinteren Verbindung (6A) ausgeformt ist, wobei dieser obere Abschnitt dem oberen Abschnitt des ersten Verbindungselements entspricht, wobei das Loch (12) und der Zahnungsabschnitt (12a), die dem ersten Verbindungselement zugeordnet sind, in der ersten hinteren Verbindung (6A) ausgeformt sind, wobei das Loch (13) und der Zahnungsabschnitt (13a), die dem zweiten Verbindungselement zugeordnet sind, in der zweiten hinteren Verbindung (6B) ausgeformt sind, und wobei die verstärkende Transmissionswelle (10) zwischen der ersten und zweiten hinteren Verbindung (6A, 6B) derart angeordnet ist, dass der eine und der andere Endabschnitt der verstärkenden Transmissionswelle (10) die jeweiligen Löcher der ersten und der zweiten hinteren Verbindung durchsetzen, wobei das erste und das zweite Ritzel (14, 15) in Verzahnungseingriff mit dem jeweiligen Zahnungsabschnitt der ersten und zweiten hinteren Verbindung stehen.

4. Sitz nach Anspruch 1, worin das Loch des ersten Verbindungselements (6A) so ausgestaltet ist, dass es sich in einer senkrechten Richtung des Sitzes erstreckt, und wobei der Zahnungsabschnitt des ersten Verbindungselements (6A) in einem Randbereich des Lochs ausgebildet ist, wodurch ein nach innen verzahnter Zahnungsabschnitt in dem ersten Verbindungselement ausgebildet ist.

5. Sitz nach Anspruch 2, worin das Loch der ersten hinteren Verbindung (6A) so ausgestaltet ist, dass es sich in einer senkrechten Richtung des Sitzes erstreckt, wobei der Zahnungsabschnitt der ersten hinteren Verbindung (6A) in einem Randbereich des Lochs ausgebildet ist, wodurch ein nach innen verzahnter Zahnungsabschnitt in der ersten hinteren Verbindung ausgebildet ist, wobei das Loch der zweiten hinteren Verbindung (6B) so ausgebildet ist, dass es sich in einer senkrechten Richtung des Sitzes erstreckt, wobei der Zahnungsabschnitt der zweiten hinteren Verbindung (6B) in einem Randbereich des Lochs ausbildet ist, wodurch ein nach innen verzahnter Zahnungsabschnitt in der zweiten hinteren Verbindung ausgebildet ist.

## Revendications

1. Siège (S) destiné à être monté dans un véhicule, comprenant :
un châssis de coussin de siège (3) comprenant un premier élément de châssis et un second élément de châssis ;
un pignon d'entraînement (7) supporté en rotation dans ledit premier élément de châssis dudit châssis de coussin de siège (3), ledit pignon d'entraînement (7) étant fonctionnellement relié à une source d'entraînement fournie avec le siège ;
un premier élément d'articulation (6A) comportant : une partie supérieure reliée pivotante audit premier élément de châssis dudit châssis de coussin de siège ; et une partie inférieure reliée pivotante à un plancher dudit véhicule, ladite partie supérieure comportant, définie en son sein, une partie de secteur denté (6a) qui est en prise avec ledit pignon d'entraînement (7) ;
ledit premier élément d'articulation (6A) comprenant un trou (12) et une partie engrenage (12a) ;
un second élément d'articulation (6B) comportant : une partie supérieure reliée pivotante audit second élément de châssis dudit châssis de coussin de siège ; et une partie inférieure reliée pivotante audit plancher dudit véhicule ;
un élément d'axe de connexion (8) s'étendant en rotation entre lesdits premier (3A) et second (3B) éléments de châssis dudit châssis de coussin de siège ;
lesdits premier et second éléments d'articulation (6A, 6B) étant accouplés l'un à l'autre par ledit élément d'axe de connexion (8) pour un mouvement synchronisé ; **caractérisé en ce que** ledit second élément d'articulation (6B) comprend un trou (13) et une partie engrenage (13a) et le siège comprend, en outré :
un arbre de transmission de renforcement (10) comportant une première partie d'extrémité et une autre partie d'extrémité, ledit arbre de transmission de renforcement (10) s'étendant parallèlement audit élément d'axe de connexion (8) de manière que sa première partie d'extrémité passe par ledit trou (12) dudit premier élément d'articulation (6A) et soit reliée en rotation audit premier élément de châssis dudit châssis de coussin de siège, tandis que son autre dite partie d'extrémité passe par ledit trou (13) dudit second élément d'articulation (6B) et est reliée en rotation audit second élément de châssis dudit châssis de coussin de siège ;
un premier pignon (14) fixé à ladite première partie d'extrémité dudit arbre de transmission de renforcement (10), ledit premier pignon (14) étant en prise avec ladite partie engrenage dudit premier élément d'articulation ;
et
un second pignon (15) fixé à ladite autre partie d'extrémité dudit arbre de transmission de renforcement (10), ledit second pignon étant en prise avec ladite partie engrenage dudit second élément d'articulation.

2. Siège selon la revendication 1, qui comprend un rail de glissement (SL) comprenant une paire de rails inférieurs (1A, 1B) fixés sur ledit plancher dudit véhicule et une paire de rails supérieurs (2A, 2B) engagés par glissement avec ladite paire de rails inférieurs, respectivement, ladite partie inférieure dudit premier élément d'articulation étant reliée pivotante à un rail de ladite paire de rails supérieurs, tandis que ladite partie inférieure dudit second élément d'articulation est reliée pivotante à l'autre rail de ladite paire de rails supérieurs.

3. Siège selon la revendication 1, dans lequel ledit premier élément d'articulation (6A) comprend une première articulation avant (5A) et une première articulation arrière (6A), dans lequel ledit premier élément de châssis comporte une partie tournée vers l'avant et une partie tournée vers l'arrière, dans lequel ladite première articulation avant (5A) est reliée pivotante à une partie tournée vers l'avant dudit premier élément de châssis, tandis que ladite première articulation arrière (6A) est reliée pivotante à une partie tournée vers l'arrière du premier élément de châssis, dans lequel ledit second élément d'articulation (6B) comprend une seconde articulation avant (5B) et une seconde articulation arrière (6B), dans lequel ledit second élément de châssis comporte une partie tournée vers l'avant et une partie tournée vers l'arrière, dans lequel ladite seconde articulation avant (5B) est reliée pivotante à une partie tournée vers l'avant dudit second élément de châssis, tandis que ladite seconde articulation arrière (6B) est reliée pivotante à une partie tournée vers l'arrière du second élément de châssis, dans lequel ladite partie secteur denté (6a) est formée dans une partie supérieure de ladite première articulation arrière (6A), ladite partie supérieure correspondant à ladite partie supérieure dudit premier élément d'articulation, dans lequel ledit trou (12) et ladite partie engrenage (12a) associée audit premier élément d'articulation sont formés dans ladite première articulation arrière (6A), dans lequel ledit trou (13) et la partie engrenage (13a) associée audit second élément d'articulation sont formés dans ladite seconde articulation arrière (6B), et dans lequel ledit arbre de transmission de renforcement (10) est agencé entre lesdites première et seconde articulations arrière (6A, 6B) de manière que lesdites première partie d'extrémité et autre partie d'extrémité de l'arbre de transmission de renforcement (10) passent par lesdits trous respectifs desdites première et seconde articulations arrière, lesdits premier et second pignons (14, 15) étant en prise avec lesdites parties engrenage, respectivement, desdites première et seconde articulations arrière.

4. Siège selon la revendication 1, dans lequel ledit trou dudit premier élément d'articulation (6A) est formé de manière à s'étendre dans une direction verticale du siège, et dans lequel ladite partie engrenage dudit premier élément d'articulation (6A) est formée dans une partie de bord dudit trou, ce qui définit une partie engrenage dentée vers l'intérieur dans ledit premier élément d'articulation.

5. Siège selon la revendication 2, dans lequel ledit trou de ladite première articulation arrière (6A) est formé de manière à s'étendre dans une direction verticale du siège, dans lequel ladite partie engrenage de ladite première articulation arrière (6A) est formée dans une partie de bord dudit trou, ce qui définit une partie engrenage dentée vers l'intérieur dans ladite première articulation arrière, ledit trou de ladite seconde articulation arrière (6B) étant formé de manière à s'étendre dans une direction verticale du siège, et dans lequel ladite partie engrenage de ladite seconde articulation arrière (6B) est formée dans une partie de bord dudit trou, ce qui définit une partie engrenage dentée vers l'intérieur dans ladite seconde articulation arrière.
